# EUROPEAN PATENT SPECIFICATION

(11) **EP 4 505 063 B1**
(45) Date of publication and mention of the grant of the patent: **02.09.2026**
(21) Application number: 23716938.8
(22) Date of filing: 06.04.2023
(51) Int. Cl.: F03D 1/04

(54) **SYSTEM FOR GENERATING ELECTRICITY**
SYSTEM ZUR ERZEUGUNG VON ELEKTRIZITÄT
SYSTÈME DE PRODUCTION D'ÉLECTRICITÉ

(30) Priority: 07.04.2022 NL 2031527
(43) Date of publication of application: 12.02.2025
(73) Proprietor: Verbakel Innovation B.V., 3054 NJ Rotterdam (NL)
(72) Inventor: JANSSEN, Jeroen Marcellus Leonardus, 3054 NJ Rotterdam (NL); VERBAKEL, Albert Johannes, 3054 NJ Rotterdam (NL)
(74) Representative: V.O.
(86) International application number: PCT/NL2023/050183
(87) International publication number: WO 2023/195854

(56) References cited:
- EP-A1- 3 597 900
- WO-A1-2016/054080
- RU-C2- 2 546 368

## Description

The invention relates to a system for generating electricity from an air flow.

Such systems are known, for example a wind turbine is configured for generating electricity from wind energy. Although wind turbines generate green electricity, i.e. electricity generated without CO2 emission, wind turbines also have drawbacks. For example, moving parts, such as blades, may cause vibrations and/or noise. Also, wind turbines require relatively a lot of space to be erected and typically may require an open landscape to allow the wind to reach the wind turbines. In fact, horizontal axis wind turbines typically are erected on tall towers, with a turbine driven by two or three blades on top of the tower. Such constructions are not easily deployable in urban environments. Also vertical axis wind turbines, which can be smaller constructions, may have drawbacks, e.g. noise generating. Also the bird population can be prone to outfall due to the moving parts of such wind turbines.

Therefore, it is known to provide electricity generating systems that are static in which rotating parts, such as blades, are omitted. Such systems typically use the pressure difference over a wing profile. For example WO 2016/054080 describes a wing profile over which air flows, having an inlet at a side of the wing profile via which air is sucked from the ambient pressure environment into the wing profile. In the inlet a turbine is positioned that generates electricity from the passing air flow. The air is outputted from the wing profile via perforations in the upper skin. Publication EP3597900 discloses a wind turbine comprising a generator and three vertical airfoils positioned parallel to each other, of which the central airfoil has a leeward opening in which air flows towards the generator. Publication RU 2 546 368 C2 discloses further relevant background art.

Although such static systems may not have the noise and/or vibration drawbacks from the dynamic or rotating wind turbine systems, their performance is rather low. Therefore, there is a need of more efficient static electricity generating systems.

Thereto, the invention provides for an electricity generating system according to claim 1.

By providing a wing profile structure comprising a first side configured to generate a low pressure and a second side configured to generate a high pressure from the fluid passing along the wing profile, a pressure difference over the wing profile structure is established when fluid flows over the wing profile structure. The wing profile structure can e.g. have an airfoil-shaped cross-section that, when positioned in a fluid flow, has a low pressure side and a high pressure side. The wing profile structure can extend longitudinally, then typically an upper side is the low pressure side and the lower side is the high pressure side. The wing profile structure can also extend along a ring-shape, then typically an inner side can be the low pressure side and an outer side can be the high pressure side.

Both the first side and the second side of the wing profile structure are provided with apertures, at least one first aperture and at least one second aperture respectively. These first and second apertures are in fluid connection through the wing profile structure. As such a fluid connection is established, through the wing profile structure, between a high pressure region at the second side of the wing profile structure and a low pressure region at the first side of the wing profile structure. The fluid connection is established through the wing profile structure preferably inside of the wing profile structure. Also, between the at least one first aperture and the at least one second aperture an electricity generating device is positioned such that fluid flowing from the second side to the first side through the fluid connection passes the electricity generating device for generating electricity from the passing fluid. The fluid flows from the high pressure region at the second side to the low pressure region at the first side through the at least second aperture to the at least first aperture due to the pressure difference between the second side and the first side and the fluid connection between the second aperture and the first aperture. By providing the electricity generating device in the fluid flow from the second side to the first side, electricity can be generated by extracting energy from the passing fluid, and thus, to generate electricity from the passing fluid flow. The first apertures may be provided at least partly on a surface of the first side of the wing profile, for example near the leading edge, for example between a nose of the wing profile and 1/4 of the chord line, or between the nose of the wing profile and 1/2 of the chord line, or even more towards the trailing edge. The second apertures are preferably provided near the trailing edge on the second side, or may be provided even at the trailing edge of the wing profile.

As such, electricity can be generated from fluid passing over a larger pressure difference than between ambient pressure and the low pressure side of the wing profile, thus providing for a greater efficiency of the electricity generating system.

The apertures may have various shapes, e.g. circular or elongated or any other shape.

Advantageously, the fluid connection between the second side and the first side is at least partly formed by a cavity inside of the wing profile structure. Thus, as much as possible of the space available inside of the wing profile structure can be used to establish the fluid connection between the high pressure, second, side and the low pressure, first side of the wing profile structure. It shall be appreciated that part of the fluid connection may be formed otherwise than by the cavity, for example being formed by an optional adjacent structure such as a support structure to which the wing profile structure may be attached. Related thereto, it shall be appreciated that the electricity generating device is positioned between the at least one first aperture and the second aperture at least in the sense of being fluidly therebetween, without necessarily being geometrically therebetween.

Advantageously, the electricity generating device is positioned in the said cavity inside of the wing profile structure. In such a cavity sufficient space can be provided to position the electricity generating device in a manner such that fluid flowing from the second side to the first side through the cavity, can pass along the electricity generating device. Alternatively, the electricity generating device may be positioned outside said cavity, for example in the aforementioned support structure or other adjacent structure. Preferably, all of the fluid flowing between the second side and the first side passes along the electricity generating device, to increase the efficiency of the system and to extract energy out of all, or as much as possible, of the fluid flowing between the high pressure side and the low pressure side. Thereto, the cavity may comprise a first cavity part and a second cavity part with the electricity generating device in between, in particular at least fluidly in between. The first cavity part is arranged between the at least one first aperture and the electricity generating device. The second cavity part is arranged between the at least one second aperture and the electricity generating device. As such, in principle most or all fluid flowing from the second side to the first side via the fluid connection passes the electricity generating device, and the generation of electricity can thus be more efficient.

Preferably, the cavity is formed as a channel at, to and/or from the position of the electricity generating device, and/or the electricity generating device is positioned fluid-tight in the channel or at an end of the channel. Advantageously, the electricity generating device is sealingly positioned in the cavity. As such, all fluid flowing through the cavity passes through the electricity generating device thus optimizing the generation of electricity.

Additionally and/or alternatively, a further electricity generating device can be provided upstream or downstream of the aforementioned electricity generating device, also in the path of the fluid connection between the second side and the first side, preferably also in the cavity forming the fluid connection between the second side and the first side, for example in the channel of the cavity in which a first electricity generating device can also be positioned. By providing multiple electricity generating devices, preferably positioned in series behind each other, more energy may be extracted out of the fluid flow, thus potentially more electricity can be generated out of the fluid passing through the fluid connection between the second side and the first side.

Advantageously, the second cavity part is funnel shaped towards the electricity generating device or devices. As such, the fluid flowing towards the electricity generating device in the second cavity part may additionally be accelerated due to the narrowing cross-section of the cavity towards the electricity generating device, thus electricity generation may be increased. The first cavity part may be funnel shaped from the first side towards the electricity generating device additionally and/or alternatively to the second cavity part. By providing the first cavity part with a funnel shape, a smooth transition of the fluid flowing out of the electricity generating device towards the first apertures can be obtained, and/or dead spaces in which fluid may be left can be obviated. The funnel shapes of the first and/or second cavity part may end at a passage or a channel, of the cavity in which the electricity generating device or devices are positioned.

Alternatively and/or additionally, a plurality of first apertures is provided on the first side of the wing profile structure and a plurality of second apertures is provided on the second side of the wing profile structure. The plurality of first apertures and the plurality of second apertures can be fluidly connected via a cavity, preferably a cavity having a first cavity part and a second cavity part with an electricity generating device inbetween. Alternatively, a first part of the plurality of first apertures is connected to a first first cavity part, and a second part of the plurality of first apertures is connected to a second first cavity part. Similarly, a first part of the plurality of second apertures is connected to a first second cavity part, and a second part of the plurality of second apertures is connected to a second second cavity part. The first and second first cavity parts can be fluidly connected to the first and second second cavity parts respectively, so with a first electricity generating device between the first first cavity part and the first second cavity part, and a second electricity generating device between the second first cavity part and the second second cavity part. As such there are two parallel fluid connections between the second side and the first side of the wing profile structure. Of course, two or more fluid connections can be established as well. Such a configuration can be beneficial for large, e.g. relatively long wing profile structure to keep the path of the fluid flow sufficiently limited to allow optimal energy extraction out of the fluid flow. Alternatively, the multiple first and second cavity parts can be fluidly connected via a single electricity generating device. Such configuration may be beneficial for more complex shapes of wing profile structures. For example, a further wing profile structure can thus be connected to the first wing profile structure having the same electricity generating device.

Advantageously, the wing profile structure can be ring-shaped, providing a structure that can relatively easy be fitted e.g. on roofs of buildings. In the ring-shaped wing profile structure the first side can typically be the inner side and the second side can typically be the outer side. Further, the configuration of the wing profile structure, e.g. a diameter of the ring shape, or an angle of attack of an airfoil profile of the wing profile structure may additionally provide for an acceleration of the air flow inside of the ring shape, additionally lowering the pressure at the lower pressure side of the structure.

Alternatively, the wing profile structure may be an elongated structure, longitudinally extending along a spanwise direction of the wing profile structure. Such a structure may e.g. be integrated to a ridge of a roof, or may be positioned on a roof where the build-up height is rather limited.

Further, the wing profile structure may be provided onto a support structure such as a tower or a pillar or a foot. Via such a support structure, the wing profile structure can be mounted to a surface. The electricity generating device or devices may be housed in such a support structure, as alluded to elsewhere herein.

At least one third aperture may be provided at the electricity generating device, allowing an additional fluid flow, in particular from outside the system, towards the first low pressure side via a downstream part of the fluid connection. The optional at least one third aperture may be arranged in the wing profile structure and/or in an adjacent structure such as the optional support structure, in particular corresponding to where the electricity generating device may be arranged. The optional at least one third aperture is preferably arranged at a side of the system corresponding to a leading edge of the wing profile structure, i.e. at a side facing in an opposite direction from the external flow of fluid passing along the wing profile, thus a high pressure side. The optional at least one third aperture may thereby advantageously complement the at least one second aperture in terms of facilitating an energizing fluid flow at the electricity generating device.

Advantageously, the wing profile structure is adjustable mounted. Preferably, the wing profile structure is adjustable mounted to adjust an angle of attack of an airfoil profile of the wing profile structure. Here, the airfoil profile is considered to be the profile of a two-dimensional cross-section of the three-dimensional wing profile structure. The cross-section is preferably made in a direction of the air flow. By adjusting the wing profile structure such that an angle of attack of, at least some, airfoil profile crosssections can be optimized, an improved use can be made of the fluid flow over the wing profile structure, e.g. a lower pressure may be obtained at the first side and a higher pressure can be obtained at the second side. Advantageously, the angle of attack of at least part of the wing profile structure is about 15 degrees, however depending on the selected airfoil profile an optimal angle of attack can be higher or lower.

Advantageously, a drainage outlet is provided at the wing profile structure, preferably at the second side of the wing profile structure, such that any dirt and/or moisture can be drained from the wing profile structure when it is positioned in air, and the fluid flow is an air flow. As such, the cavity of the wing profile structure can be kept relatively dry and clean, also it can be obviated that too much humidity may hinder the operation of the electricity generating device. In a preferred embodiment, the drainage outlet may comprise a gooseneck piping allowing to optimally drain the cavity.

The electricity generating device can be an electricity generating turbine, of which a rotor is put in motion by the fluid flow passing by, said rotor driving a generator.

The system may further comprise an inverter that is configured to transform the electricity generated by the electricity generating device into a further state of electricity, e.g. into a state of electricity deliverable to the power grid, or into a state of electricity deliverable to a storage cell such as a battery etc.

Additionally, the system may further comprise a power connection to connect the system to a further system, preferably for delivering the power generated by the system to the further system such as a power grid or a storage cell.

The wing profile structure may be arranged and/or supported with its spanwise direction extending mainly vertically. Thereby, the wing profile structure may be made relatively long without occupying an excessively large area of a support surface such as a ground surface or roof surface. Also, the wing profile structure can thereby reach to a relatively high level to be able to catch high winds, while being supported at a conveniently low level such as a ground level or other level that is relatively accessible for construction, maintenance, etc. Meanwhile, the electricity generating device or devices may be conveniently arranged at the foot end of the wing profile structure or structures. For example, a spanwise dimension of the wing profile structure may be larger than 10 m, preferably larger than 20 m, more preferably larger than 50 m, for example about 100 m or about 200 m.

The invention further relates to a utility device to which the system with the wind profile structure is mounted and/or integrated. The utility device can be a street light installation, a charging post, a roof top, a building.

These and other aspects will be further elucidated with reference to the drawing comprising figures of exemplary embodiments. Corresponding elements are designated with corresponding reference signs. In the drawing shows:
Fig. 1 a two-dimensional representation of fluid flowing around an airfoil profile of a wing profile structure;
Fig. 2 an embodiment of a first cavity part and a second cavity part of a wing profile structure at the position of the electricity generating device;
Fig. 3 an embodiment of a first cavity part and a second cavity part of a wing profile structure at another position than that of the electricity generating device;
Fig. 4a an embodiment of a first cavity part and a second cavity part of a wing profile structure at the position of the electricity generating device;
Fig. 4b a detail of the first apertures of the wing profile structure of fig. 4a;
Fig. 4c a detail of the second apertures of the wing profile structure of fig. 4a;
Fig. 5 a three-dimensional representation of the first cavity part and the second cavity part in an elongated wing profile structure;
Fig. 6 an embodiment of a system comprising a wing profile structure on a utility building;
Fig. 7 an embodiment of a system with a ring-shaped wing profile structure;
Fig. 8 a cross-section of the wing profile structure of fig. 7 at a position different from the electricity generating device;
Fig. 9 an embodiment of the system with the wing profile structure integrated as a utility device;
Figs. 10A and 10B a cross sectional top view and a cross sectional side view, respectively, of an embodiment of a system comprising a wing profile structure with its spanwise direction extending mainly vertically;
Fig. 11 shows a cross sectional front view of an embodiment similar to Figs. 10A-B, here comprising two wing profile structures arranged side by side with an interspace therebetween, the two wing profile structures being associated with a single common electricity generating device;
Fig. 12 shows a perspective view of a variant of the embodiment of Fig. 11, here with the electricity generating device housed in a common support structure for the two wing profile structures.

It is to be noted that the figures are given by way of exemplary examples and are not limiting to the disclosure.

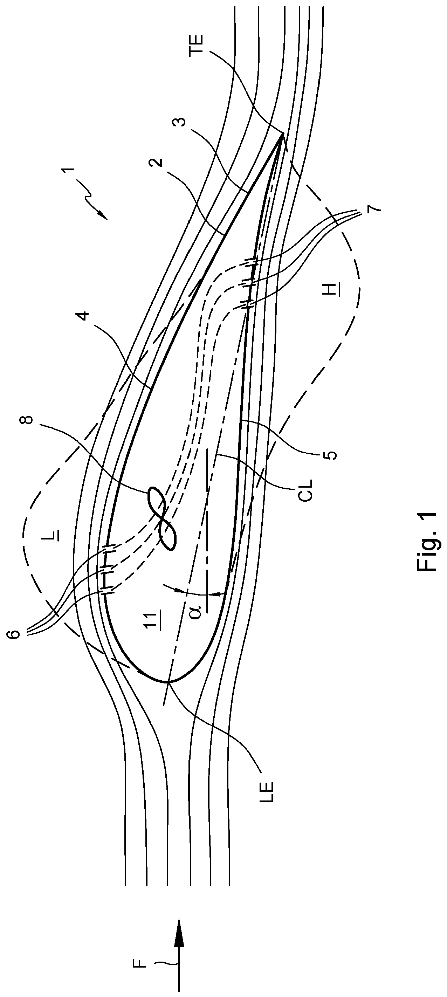

Fig. 1 shows a cross-section through a wing profile structure 1 of a system 100 for generating electricity from a fluid. The wing profile structure 1 is a three-dimensional structure extending for example in a longitudinal direction or a circumferential direction or any other third direction. A cross-section of such a wing profile structure 1, in particular a cross-section in a plane perpendicular to the third direction as shown here in fig. 1, gives an airfoil profile 2. The airfoil profile 2 is considered to be a two-dimensional profile extending in the direction of the fluid flow F, typically in a plane perpendicular to the third direction of the three-dimensional wing profile structure 1.

The airfoil profile 2 has a leading edge LE and a trailing edge TE with a chord line CL extending from the leading edge LE to the trailing edge TE. The angle that the chord line makes with respect to the direction of the incoming fluid flow F, is the so-called angle of attack alpha.

The wing profile structure 1, and consequently also the airfoil profile 2, comprises a first side 4 and a second side 5. Here, the first side 4 corresponds with an upper side and the second side 5 corresponds with a lower side. When fluid flows along the wing profile structure 1, at the first side 4 there is a low pressure region L, and at the second side 5 there is a high pressure region H. It is understood that the representation of fluid flow lines and of the low and high pressure region is purely schematic. Depending on the shape of the airfoil profile, the low pressure region L is typically more towards the leading edge LE and the high pressure region H is typically more towards the trailing edge TE.

By now providing a fluid connection between the high pressure region H and the low pressure region L through the wing profile structure 1, fluid can flow from the high pressure region H to the low pressure region L through the wing profile structure 1. By positioning an electricity generating device 8 inside of the wing profile structure 1, such that fluid flowing from the high pressure region H towards the low pressure region L, passes the electricity generating device 8, electricity can be generated out of the fluid passing by. As such, in an efficient, compact, and relatively simple manner, electricity can be generated with a static structure, as opposed to a dynamic structure as e.g. a wind turbine having rotating blades, or otherwise having moving elements. Such a wing profile structure provides many opportunities for application and/or positioning in e.g. urban environments or environments with regarding noise and/or visual pollution.

To provide for a fluid connection between the second side 5 and the first side 4, apertures are provided in the first side 4 and in the second side 5, respectively at least one first aperture 6 in the first side 4 and at least one second aperture 7 in the second side 5. The electricity generating device 8, preferably a generator 8, is positioned inside of the wing profile structure 1 and can thus generate electricity from the fluid flow passing by. The fluid can be air or liquid, such as water.

The wing profile structure 1 can comprise a skin 3 forming the first side 4 and the second side 5 and enclosing a cavity 11 inside of the wing profile structure 1. The skin 3 can be a metallic skin, a composite skin or even a honeycomb skin enclosing the cavity 11.

The cavity 11 can have various shapes and/or configuration, but advantageously forms the fluid connection between the second apertures 7 and the first apertures 6, thus forming a fluid connection between the high pressure region H and the low pressure region L through the wing profile structure 1. The second apertures 7 typically may be arranged more towards the trailing edge TE of the wing profile structure 1 to benefit more from a higher pressure in the high pressure region H. Alternatively and/or additionally, the second apertures 7 may be arranged at the trailing edge, e.g. at least one aperture may be provided at a position where the first side and the second side would meet at the trailing edge. The first apertures 6 typically may be arranged more towards the leading edge LE of the wing profile structure 1 to benefit more from a lower pressure in the low pressure region L. As such, between the second apertures 7 and the first apertures 5 a relatively large pressure difference can be obtained, resulting in a fluid flow between the second apertures 7 towards the first apertures 5.

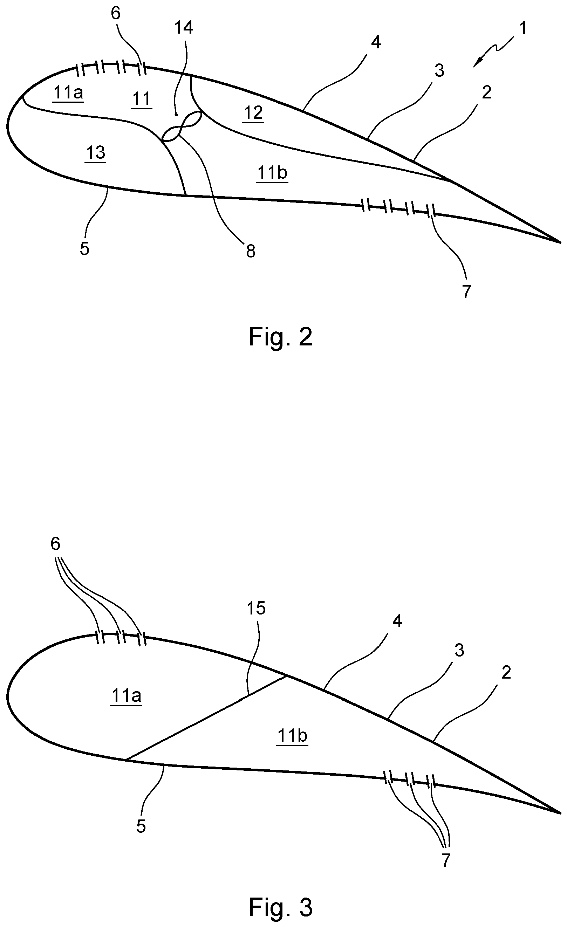

Fig. 2 gives a cross-section through the wing profile structure 1 and through the generator 8. In the example shown in fig. 2, the skin forming the first side 4 and the second side 5 encloses an inner space 12 that is larger than the cavity 11 forming the fluid connection between the second apertures 7 and the first apertures 6. In the example of fig. 1 the inner space 12 and the cavity 11 are the same spaces. Here, in fig. 2, the cavity 11 is smaller and shaped differently than the inner space 12. A volume 13 between the skin 3 and the cavity 11 can be hollow and/or may be filled, e.g. partially filled. Here, the cavity 11 comprises a first cavity part 11a and a second cavity part 11b. The first cavity part 11a is fluidly connected with the first apertures 6 in the first side 4 at the low pressure region L, thus forming a low pressure chamber. The second cavity part 11b is fluidly connected with the second apertures 7 in the second side 5 at the high pressure region H, thus forming a high pressure chamber. Between the first cavity part 11a and the second cavity part 11b, the electricity generating device 8 is positioned. Here, the electricity generating device 8 is positioned in a passage 14 connecting the first cavity part 11a and the second cavity part 11b and enclosing the electricity generating device 8. Preferably, the electricity generating device 8 is tightly arranged in the passage, more preferably is sealingly arranged in the passage 14 such that all fluid flowing from the second apertures 7 towards the first apertures 6 pass along the electricity generating device 8. As such, optimal use can be made of the electricity generating device 8 to generate electricity from the available fluid flow.

Here, in fig. 2, the first cavity part 11a and the second cavity part 11b are funnel-shaped towards the electricity generating device 8, here towards the passage 14. In practice, the cavity parts 11a, 11b are tapered towards the position of the electricity generating device 8, so that the crosssectional area of the cavity parts 11a, 11b becomes smaller towards the position of the electricity generation device. As such, optimal use can be made of the aerodynamics of the fluid flowing to and from the electricity generating device. By tapering the second cavity part 11b towards where the electricity generating device can be positioned, additional acceleration of the incoming fluid flow from the second apertures 7 towards the electricity generating device may be obtained. Also, by tapering the first cavity part 11a towards the position of the electricity generating device 8, a larger area of the skin with multiple apertures 6 can be fluidly connected to the second apertures, via the electricity generating device. It may be understood that other arrangements of the cavity parts can be possible as well. Further, it is noted that the cross-section of Fig. 2 is made through the electricity generating device 8, but that at other positions, the cavity parts can have other shapes, as can be seen e.g. in Fig. 3. Between the high pressure chamber 11b and the low pressure chamber 11a, a partition wall 15 can be arranged. Such partition wall 15 can be rigid, e.g. an aluminium or composite plate, or can be flexible, e.g. a membrane.

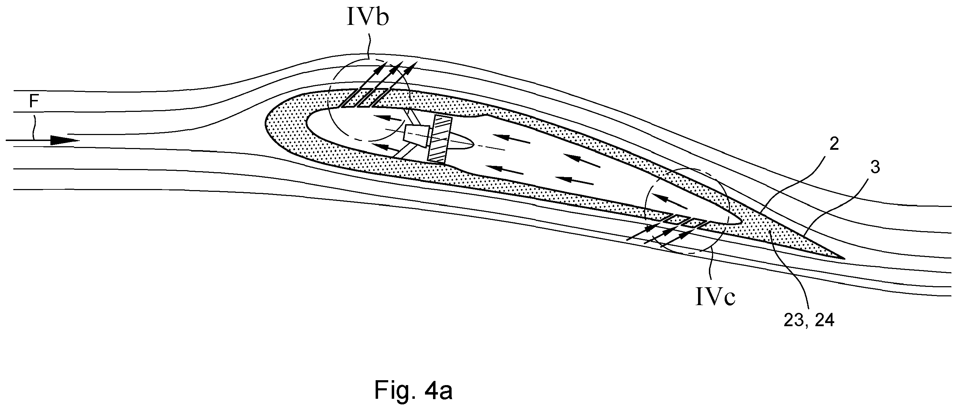

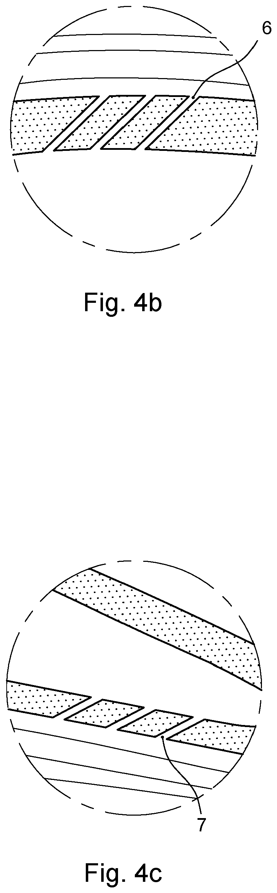

Fig. 4a shows another embodiment of an airfoil profile 2 of a wing profile structure 1. Here, the airfoil profile 2 has a skin 3 that is reinforced with a foam 23 forming a foam layer 24. The foam layer 24 encloses the cavity 11, that is divided in a first cavity part 11a and the second cavity part 11b with the electricity generating device 8, here a turbine 8, inbetween. The first apertures 6 and the second apertures 7 are through holes through the skin with the foam layer 3. The fluid flowing from the second apertures 7 at the lower side 5 of the airfoil profile 2 through the turbine 8 towards the first apertures 6 at the first side 4 is shown by arrows. Fig. 4b and Fig. 4c show a detail of the first apertures 6 and the second apertures 7 respectively. It is understood that multiple apertures can be provided through the skin with the foam layer.

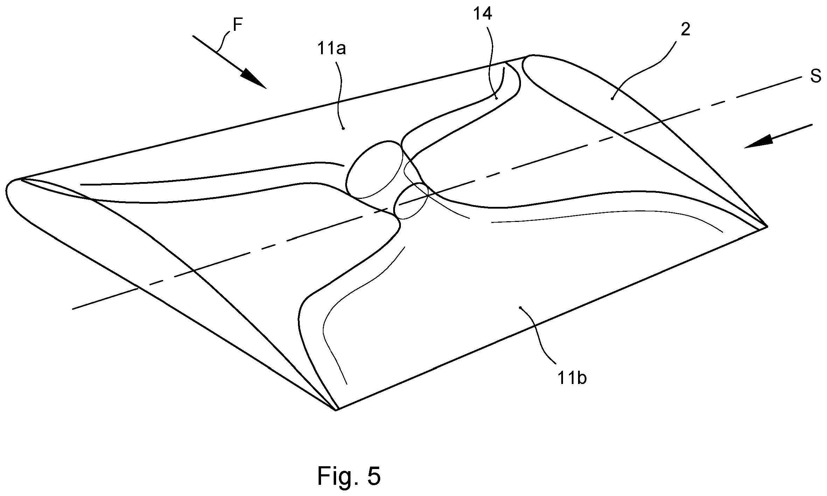

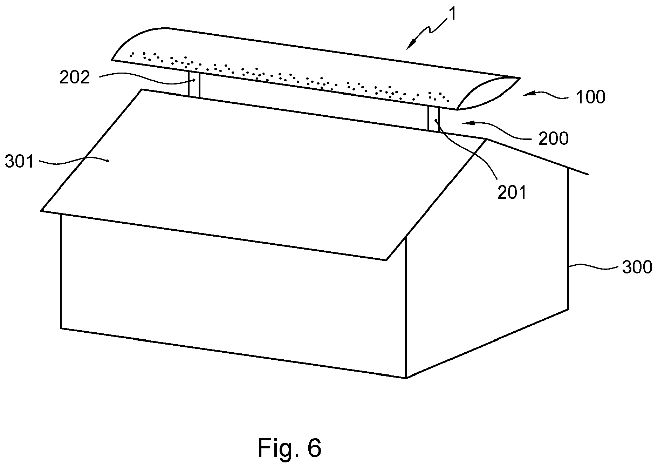

Fig. 5 shows an embodiment of a wing profile structure 1 extending in a longitudinal direction, here a spanwise direction S. A schematic representation is given of the low pressure chamber 11a and the high pressure chamber 11b that taper towards the passage 14 in which an electricity generating device 8 (not shown) can be positioned. Such a longitudinally extending wing profile structure 1 can e.g. be mounted onto a roof of a building, e.g. onto a roof top of a building. This is illustrated in Fig. 6. The wing profile structure 1 is mounted onto a support structure 200, here having two support legs 201, 202. The system 100 comprises the wing profile structure 1 and, at least, the support legs 201, 202. The legs are mounted onto a building 300, in particular onto a roof 301 of the building 300. Such a configuration can be beneficial in regions where there is for example a main wind direction. Advantageously, the wing profile structure 1 is adjustable, more particularly, an angle of attack alpha of the wing profile structure 1 is adjustable. Adjusting the angle of attack of the wing profile structure 1 can for example be done by rotating the wing profile structure 1 onto the support legs 201, 202. The support legs 201, 202 may thereto be provided with an actuator or a drive source to adjust the angle of the wing profile structure 1. Electricity that is generated by the electricity generating device 8 inside of the wing profile structure 1 can be discharged e.g. to the electricity network of the building 300 or to the mains, e.g. by cables through one of the support legs 201, 202.

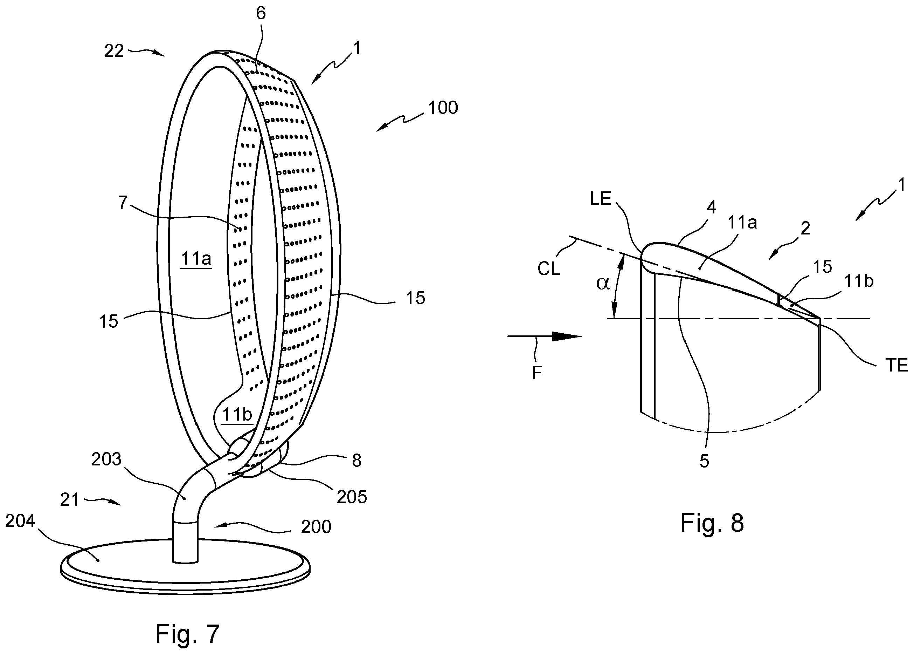

Fig. 7 shows an alternative embodiment of the wing profile structure 1 and the system 100. Here, the wing profile structure 1 is annular-shaped. The wing profile structure 1 is shaped in the form of a ring. The ring may e.g. be circular or elliptical. The wing profile structure 1 is supported on the support structure 200. The support structure 200 comprises a leg 203 and a foot 204. The system 100 as shown in fig. 7 can e.g. be mounted on a roof of a building block, or in a street. It is envisaged that the foot 204 can be obviated and that the wing profile structure 1 may be fixed to a surface directly with the foot 203. In fig. 7 the partition all 15 between the high pressure chamber 11b and the low pressure chamber 11a is schematically indicated. The electricity generating device 8, typically a turbine or a generator, is positioned at the end of the leg 203 inside of an enclosure 205. The electricity generating device 8 is positioned between the high pressure chamber 11b, i.e. the second cavity part, and the low pressure chamber 11a, i.e. the first cavity part. Here, the first cavity part 11a and the second cavity part 11b extend circumferentially over the wing profile structure 1, with the electricity generating device 8 here at a foot end 21 of the wing profile structure 1. Alternatively, one may envisage that additionally a further electricity generating device 8 can be provided between the first cavity part 11a and the second cavity part 11b. Thus, effectively splitting the first cavity part 11a in two first cavity parts, and the second cavity part 11b in two second cavity parts, wherein the associated first and second cavity parts are in fluid connection with each other via their respective associated electricity generating device. The wing profile structure 1 may be rotatable arranged onto the support 200, e.g. to turn the wing profile structure 1 into the wind flow direction when the wind direction changes. It may be understood that, instead of a ring-shaped structure 1, the structure 1 can be ellipse shaped or have any other shape.

Fig. 8 shows a cross-section of the wing profile structure 1 of fig. 7, i.e. the airfoil profile 2, at a position different than the position of the electricity generating device. In this example, the cross-section is made at a top end 22 of the wing profile structure 1, opposite the foot end 21. The partition wall 15 separates the second cavity part 11b from the first cavity part 11a. Here the first side 4 of the wing profile structure 1, is here an outer side of the wing profile structure 1 and the second side 5 is here the inner side of the wing profile structure 1. The chord line CL between the leading edge LE and the trailing edge TE is indicated, as well as a main flow direction F. The airfoil profile 2 is positioned under an angle of attack alpha of about 15 degrees, for optimizing the aerodynamic performance of the airfoil profile, namely providing an optimal pressure difference between the second side 5 and the first side 4, thus providing an optimal lift of the airfoil profile. Depending on the chosen airfoil profile, the optimal angle of attack can be different. Also, the wing profile structure 1 can be adjustable to alter the angle of attack. Here, one may consider adjusting parts of the wing profile structure 1, e.g. four sections of the ring shaped wing profile structure 1 may be adjustable independently of each other. Each section may cover a part of the circumference of the ring shaped wing profile structure 1.

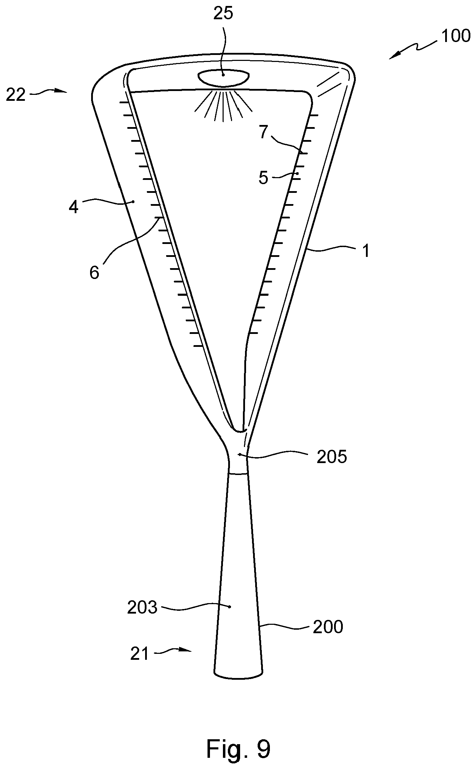

Fig. 9 shows an alternative embodiment of the system 100. Here, the system 100 is integrated as a utility device, in particular a street lantern. The wing profile structure 1 is triangular shaped, with the first side 4 being an outer side of the wing profile structure 1, and the second side 5 being an inner side of the wing profile structure 1. A light source 25 is integrated into the wing profile structure 1, here at an upper end 22 of the structure 1. The electricity generating device 8 can be contained in the enclosure 205 where the support structure 200 connects to the wing profile structure 1. So, all connections needed to connect the electricity generating device to a further system, e.g. a mains or any other grid, can go through the foot 203 of the support structure 200. As such, many implementations of the wing profile structure 1 are possible, in particular in urban environments.

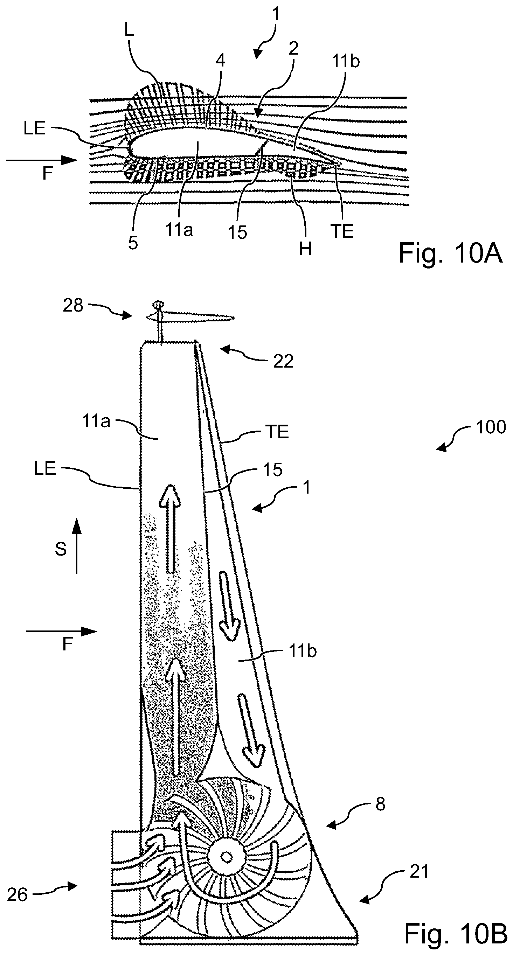

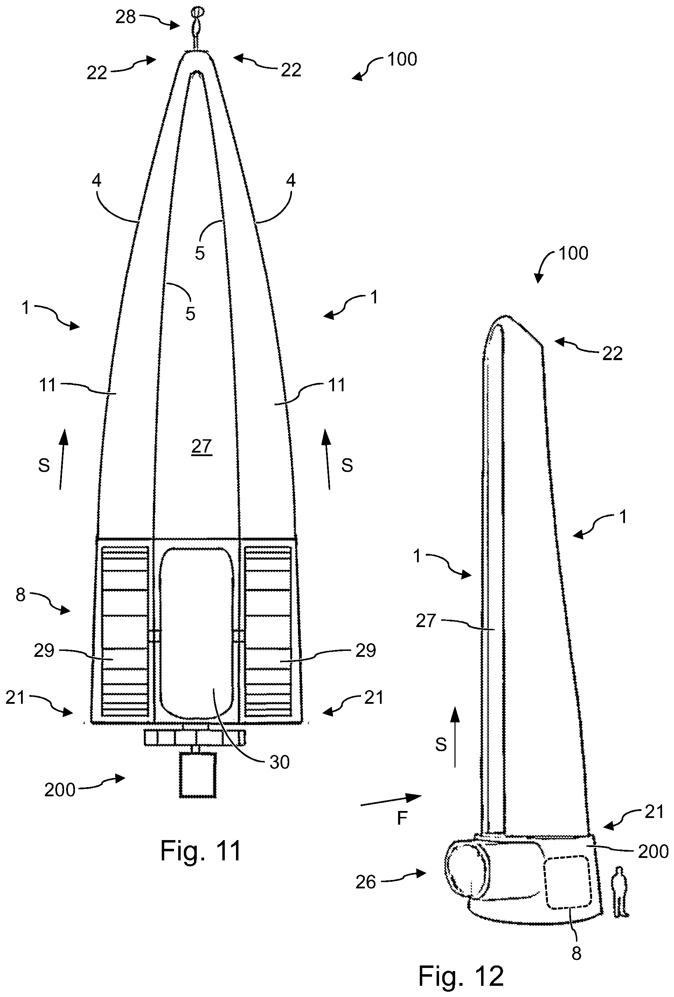

Figs. 10A-B show a further alternative embodiment of the system 100. Although first and second apertures 6, 7 are not shown in Figs. 10A-B, it shall be appreciated that such apertures may be applied correspondingly as in other shown examples. In this respect, it is noted that Fig. 10A may be understood as largely corresponding to Fig. 3. In the example of Figs. 10A-B, and similarly in Figs. 11 and 12, the spanwise direction S of the wing profile structure 1 extends mainly vertically, wherein the electricity generating device 8 is here arranged at the foot end 21 of the wing profile structure 1.

Fig. 10B shows that in this example at least one third aperture 26 is provided at the electricity generating device 8, allowing an additional fluid flow from outside the system 100, towards the low pressure first side 4 via a downstream part of the fluid connection, in particular via the first cavity part 11a. The at least one third aperture 26 is here arranged at a side of the system 100 corresponding to the leading edge LE of the wing profile structure 1, i.e. at a side facing in an opposite direction from the main flow direction F of the external flow of fluid, thus a high pressure side. In alternative embodiments, such third apertures may be omitted, so that the flow of fluid through the electricity generating device 8 may be limited e.g. to a flow coming from the second cavity part 11b or otherwise from the second apertures 7.

Fig. 11 shows a variant comprising two wing profile structures 1 arranged side by side with an interspace 27 therebetween. Advantageously, the two wing profile structures 1 are here arranged, in particular with the respective second sides 5 facing each other, to provide a combined structure that is substantially symmetric about a central vertical plane. In this way, lateral forces on the wing profile structures 1 can be well balanced, resulting in a relatively stable overall structure. As shown in Fig. 11, the two wing profile structures 1 may be interconnected at their top ends 22, in particular to provide additional stabilization there.

The two wing profile structures 1 are here associated with a single common electricity generating device 8. Here, the single electricity generating device 8 is provided with two fans 29, one for each wing profile structure 1, the two fans 29 being coupled to a same rotor shaft of a generator 30 of the electricity generating device 8.

Fig. 12 shows a variant of the example of Fig. 11, wherein the electricity generating device 8 is housed in a support structure 200 that is here also common to both wing profile structures 1. A third aperture 26 can also be seen in Fig. 12, similar to the third aperture in Fig. 10B. Again, although generally advantageous, such a third aperture may be omitted in some embodiments.

In embodiments, such as those of Figs. 10A-B, 11, and 12, where the spanwise direction S of the wing profile structure 1 extends mainly vertically, one or more additional apertures may generally be provided, for example at the top end 22 of the wing profile structure 1.

To some extent, the examples shown Figs. 11 and 12 may also be considered to be variants of the example shown in Fig. 7, or vice versa, in the sense that also in Fig. 7 wing profile sections may be considered to extend vertically side by side in a symmetrical manner with an interspace therebetween, moreover with interconnections at the foot end 21 and the top end 22.

As shown in Figs. 10B and 11, a sensor 28 may be provided at the top end 22 of the wing profile structure 1. The sensor 28 may be a wind sensor, in particular for sensing wind speed and/or direction. Advantageously, the system 100 may comprise a controller that controls an orientation of at least the wing profile structure 1, in particular about a vertical rotation axis, in dependence of an output of the sensor 28. Thereby, the wing profile structure 1 may be oriented differently depending on wind conditions, in order to optimize an electricity generating yield of the system 100.

For the purpose of clarity and a concise description, features are described herein as part of the same or separate embodiments, however, it will be appreciated that the scope of the claims and disclosure may include embodiments having combinations of all or some of the features described. It may be understood that the embodiments shown have the same or similar components, apart from where they are described as being different.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to an advantage. Many variants will be apparent to the person skilled in the art. All variants are understood to be comprised within the scope defined in the following claims.

## Claims

1. System for generating electricity from a fluid, the system comprising
- a wing profile structure (1) comprising a first side configured to generate a low pressure and a second side configured to generate a high pressure from the fluid passing along the wing profile;
- wherein the first side (4) comprises at least one first aperture (6);
- wherein the second side (5) comprises at least one second aperture (7), wherein the at least one first aperture is arranged on the first side near a leading edge of the wing profile structure, and the at least one second aperture is arranged on the second side of the wing profile structure near a trailing edge of the wing profile structure;
- wherein between the at least one first aperture (6) and the at least one second aperture (7), a fluid connection is provided through the wing profile structure;
- wherein between the at least one first aperture (6) and the at least one second aperture (7) an electricity generating device (8) is positioned such that fluid flowing from the second high pressure side to the first low pressure side through the fluid connection passes the electricity generating device for generating electricity from the passing fluid.

2. System according to claim 1, wherein the fluid connection is formed by cavity (11) inside of the wing profile structure.

3. System according to claim 2, wherein the electricity generating device (8) is positioned inside of the cavity (11).

4. System according to claim 3, wherein the cavity comprises at least one first cavity part between the at least one first aperture (6) and the electricity generating device (8), and at least one second cavity part between the at least one second aperture (7) and the electricity generating device (8).

5. System according to claim 2 or 3, wherein the cavity (11) at the position of the electricity generating device (8), forms a passage enclosing the electricity generating device such that all fluid flowing from the at least second aperture to the at least first aperture passes the electricity generating device.

6. System according to any of the preceding claims, comprising a further electricity generating device positioned in the fluid connection between the at least one second aperture and the at least one first aperture upstream or downstream of another electricity generating device
, and/or wherein the at least one first cavity part (11a) and/or the at least one second cavity part (11b) are funnel shaped tapering towards a passage of the cavity containing the at least one electricity generating device.

7. System according to any of the preceding claims, wherein a first plurality of first apertures (6) is fluidly connected to a first first cavity part and a second plurality of first apertures is fluidly connected to a second first cavity part
, and/or wherein a first plurality of second apertures is fluidly connected to a first second cavity part and a second plurality of second apertures is fluidly connected to a second second cavity part.

8. System according to any of the preceding claims, comprising a further wing profile structure comprising a first side (4) configured to generate a low pressure, the first side comprising at least one first aperture and a second side (5) configured to generate a high pressure, the second side comprising at least one second aperture;
wherein between the at least one first aperture (6) and the at least one second aperture (7), a fluid connection is provided; wherein fluid flowing through the fluid connection passes through the electricity generating device of another wing profile structure.

9. System according to any of the preceding claims, wherein the wing profile structure (1) is ring shaped.

10. System according to any of the claims 1 - 8, wherein the wing profile structure (1) is longitudinally extended along a spanwise direction of the wing profile structure.

11. System according to any of the preceding claims, further comprising a support structure on which the at least one wing profile structure is mounted
, and/or wherein the wing profile structure (1) is adjustable mounted, such that an angle of attack of the wing profile structure is adjustable.

12. System according to any of the preceding claims, wherein the wing profile structure is arranged such that a cross-section of the wing profile structure has an angle of attack of about 15 degrees
, and/or wherein the electricity generating device (8) is sealingly arranged in the cavity.

13. System according to any of the preceding claims, wherein a drainage outlet is provided at the second side of the wing profile structure, the drainage outlet preferably comprising a gooseneck piping.

14. Utility device comprising one of a street light installation, a charging post, a roof top, a building; wherein the utility device is provided with a system according to any of the claims 1 - 13.

15. Utility device according to claim 14, wherein the system is integrated into the utility device.

## Patentansprüche

1. System zur Erzeugung von Elektrizität aus einem Fluid, wobei das System umfasst
- eine Flügelprofilstruktur (1) mit einer ersten Seite, die so konfiguriert ist, dass sie einen Unterdruck erzeugt, und mit einer zweiten Seite, die so konfiguriert ist, dass sie einen Überdruck aus dem entlang des Flügelprofils passierenden Fluid erzeugt;
- wobei die erste Seite (4) mindestens eine erste Öffnung (6) aufweist;
- wobei die zweite Seite (5) mindestens eine zweite Öffnung (7) aufweist, wobei die mindestens eine erste Öffnung auf der ersten Seite nahe einer Vorderkante der Flügelprofilstruktur angeordnet ist und die mindestens eine zweite Öffnung auf der zweiten Seite der Flügelprofilstruktur nahe einer Hinterkante der Flügelprofilstruktur angeordnet ist;
- wobei zwischen der mindestens einen ersten Öffnung (6) und der mindestens einen zweiten Öffnung (7) eine Fluidverbindung durch die Flügelprofilstruktur vorgesehen ist;
- wobei zwischen der mindestens einen ersten Öffnung (6) und der mindestens einen zweiten Öffnung (7) eine Stromerzeugungsvorrichtung (8) so positioniert ist, dass ein Fluid, das von der zweiten Überdruckseite zur ersten Unterdruckseite durch die Fluidverbindung strömt, die Stromerzeugungsvorrichtung passiert, um aus dem vorbeiströmenden Fluid Strom zu erzeugen.

2. System nach Anspruch 1, wobei die Fluidverbindung durch einen Hohlraum (11) innerhalb der Flügelprofilstruktur gebildet wird.

3. System nach Anspruch 2, wobei die Stromerzeugungsvorrichtung (8) innerhalb des Hohlraums (11) positioniert ist.

4. System nach Anspruch 3, wobei der Hohlraum mindestens einen ersten Hohlraumteil zwischen der mindestens einen ersten Öffnung (6) und der Stromerzeugungsvorrichtung (8) und mindestens einen zweiten Hohlraumteil zwischen der mindestens einen zweiten Öffnung (7) und der Stromerzeugungsvorrichtung (8) aufweist.

5. System nach Anspruch 2 oder 3, wobei der Hohlraum (11) an der Position der Stromerzeugungsvorrichtung (8) einen Durchgang bildet, der die Stromerzeugungsvorrichtung so umschließt, dass alle von der mindestens zweiten Öffnung zur mindestens ersten Öffnung strömenden Fluide die Stromerzeugungsvorrichtung passieren.

6. System nach einem der vorstehenden Ansprüche, mit einer weiteren Stromerzeugungsvorrichtung, die in der Fluidverbindung zwischen der mindestens einen zweiten Öffnung und der mindestens einen ersten Öffnung stromaufwärts oder stromabwärts einer anderen Stromerzeugungsvorrichtung positioniert ist,
und/oder wobei der mindestens eine erste Hohlraumteil (11a) und/oder der mindestens eine zweite Hohlraumteil (11b) trichterförmig zu einem Durchgang des Hohlraums hin verjüngt sind, der die mindestens eine Stromerzeugungsvorrichtung enthält.

7. System nach einem der vorstehenden Ansprüche, wobei eine erste Vielzahl von ersten Öffnungen (6) fluidisch mit einem ersten ersten Hohlraumteil verbunden ist und eine zweite Vielzahl von ersten Öffnungen fluidisch mit einem zweiten ersten Hohlraumteil verbunden ist,
und/oder wobei eine erste Vielzahl von zweiten Öffnungen fluidisch mit einem ersten zweiten Hohlraumteil verbunden ist und eine zweite Vielzahl von zweiten Öffnungen fluidisch mit einem zweiten zweiten Hohlraumteil verbunden ist.

8. System nach einem der vorstehenden Ansprüche, mit einer weiteren Flügelprofilstruktur, die eine erste Seite (4), die so konfiguriert ist, dass sie einen Unterdruck erzeugt, wobei die erste Seite mindestens eine erste Öffnung aufweist, und eine zweite Seite (5), die so konfiguriert ist, dass sie einen Überdruck erzeugt, wobei die zweite Seite mindestens eine zweite Öffnung aufweist, aufweist;
wobei zwischen der mindestens einen ersten Öffnung (6) und der mindestens einen zweiten Öffnung (7) eine Fluidverbindung vorgesehen ist; wobei das durch die Fluidverbindung strömende Fluid durch die Stromerzeugungsvorrichtung einer anderen Flügelprofilstruktur passiert.

9. System nach einem der vorstehenden Ansprüche, wobei die Flügelprofilstruktur (1) ringförmig ist.

10. System nach einem der Ansprüche 1 bis 8, wobei die Flügelprofilstruktur (1) in Längsrichtung entlang einer Spannweitenrichtung der Flügelprofilstruktur verlängert ist.

11. System nach einem der vorstehenden Ansprüche, das ferner eine Stützstruktur aufweist, auf der die mindestens eine Flügelprofilstruktur angebracht ist,
und/oder wobei die Flügelprofilstruktur (1) einstellbar angebracht ist, so dass ein Anstellwinkel der Flügelprofilstruktur einstellbar ist.

12. System nach einem der vorstehenden Ansprüche, wobei die Flügelprofilstruktur so angeordnet ist, dass ein Querschnitt der Flügelprofilstruktur einen Anstellwinkel von etwa 15 Grad aufweist,
und/oder wobei die Stromerzeugungsvorrichtung (8) dichtend in dem Hohlraum angeordnet ist.

13. System nach einem der vorstehenden Ansprüche, wobei an der zweiten Seite der Flügelprofilstruktur ein Entwässerungsauslass vorgesehen ist, wobei der Entwässerungsauslass vorzugsweise eine Schwanenhalsleitung aufweist.

14. Versorgungsvorrichtung mit einer von einer Straßenbeleuchtungsanlage, eine Ladestation, ein Dach, ein Gebäude, wobei die Versorgungsvorrichtung mit einem System nach einem der Ansprüche 1 bis 13 versehen ist.

15. Versorgungsvorrichtung nach Anspruch 14, wobei das System in die Versorgungsvorrichtung integriert ist.

## Revendications

1. Système pour générer de l'électricité à partir d'un fluide, le système comprenant
- une structure à profil d'aile (1) comprenant un premier côté configuré pour générer une basse pression et un deuxième côté configuré pour générer une haute pression à partir du fluide passant le long du profil d'aile ;
- dans lequel le premier côté (4) comprend au moins une première ouverture (6) ;
- dans lequel le deuxième côté (5) comprend au moins une deuxième ouverture (7), dans lequel l'au moins une première ouverture est agencée sur le premier côté près d'un bord d'attaque de la structure à profil d'aile, et l'au moins une deuxième ouverture est agencée sur le deuxième côté de la structure à profil d'aile près d'un bord de fuite de la structure à profil d'aile ;
- dans lequel une connexion fluidique est prévue entre l'au moins une première ouverture (6) et l'au moins une deuxième ouverture (7), à travers la structure à profil d'aile ;
- dans lequel un dispositif de génération d'électricité (8) est positionné entre l'au moins une première ouverture (6) et l'au moins une deuxième ouverture (7) de sorte qu'un fluide s'écoulant du deuxième côté haute pression au premier côté basse pression à travers la connexion fluidique passe par le dispositif de génération d'électricité pour générer de l'électricité à partir du fluide qui passe.

2. Système selon la revendication 1, dans lequel la connexion fluidique est formée par une cavité (11) à l'intérieur de la structure à profil d'aile.

3. Système selon la revendication 2, dans lequel le dispositif de génération d'électricité (8) est positionné à l'intérieur de la cavité (11).

4. Système selon la revendication 3, dans lequel la cavité comprend au moins une première partie de cavité entre l'au moins une première ouverture (6) et le dispositif de génération d'électricité (8), et au moins une deuxième partie de cavité entre l'au moins une deuxième ouverture (7) et le dispositif de génération d'électricité (8).

5. Système selon la revendication 2 ou 3, dans lequel à la position du dispositif de génération d'électricité (8), la cavité (11) forme un passage renfermant le dispositif de génération d'électricité de sorte que tout fluide s'écoulant de l'au moins deuxième ouverture à l'au moins première ouverture passe par le dispositif de génération d'électricité.

6. Système selon l'une des revendications précédentes, comprenant un dispositif de génération d'électricité supplémentaire positionné dans la connexion fluidique entre l'au moins une deuxième ouverture et l'au moins une première ouverture en amont ou en aval d'un autre dispositif de génération d'électricité,
et/ou dans lequel l'au moins une première partie de cavité (11a) et/ou l'au moins une deuxième partie de cavité (11b) sont en forme d'entonnoir se rétrécissant vers un passage de la cavité contenant l'au moins un dispositif de génération d'électricité.

7. Système selon l'une des revendications précédentes, dans lequel une première pluralité de premières ouvertures (6) est connectée de manière fluidique à une première première partie de cavité, et une deuxième pluralité de premières ouvertures est connectée de manière fluidique à une deuxième première partie de cavité,
et/ou dans lequel une première pluralité de deuxièmes ouvertures est connectée de manière fluidique à une première deuxième partie de cavité, et une deuxième pluralité de deuxièmes ouvertures est connectée de manière fluidique à une deuxième deuxième partie de cavité.

8. Système selon l'une des revendications précédentes, comprenant une structure à profil d'aile supplémentaire comprenant un premier côté (4) configuré pour générer une basse pression, le premier côté comprenant au moins une première ouverture, et un deuxième côté (5) configuré pour générer une haute pression, le deuxième côté comprenant au moins une deuxième ouverture ;
dans lequel une connexion fluidique est prévue entre l'au moins une première ouverture (6) et l'au moins une deuxième ouverture (7) ;
dans lequel fluide s'écoulant à travers la connexion fluidique passe à travers le dispositif de génération d'électricité d'une autre structure à profil d'aile.

9. Système selon l'une des revendications précédentes, dans lequel la structure à profil d'aile (1) est en forme d'anneau.

10. Système selon l'une des revendications 1 à 8, dans lequel la structure à profil d'aile (1) s'étend longitudinalement le long du sens de l'envergure de la structure à profil d'aile.

11. Système selon l'une des revendications précédentes, comprenant en outre une structure de support sur laquelle l'au moins une structure à profil d'aile est montée,
et/ou dans lequel la structure à profil d'aile (1) est montée de manière réglable, de sorte qu'un angle d'attaque de la structure à profil d'aile soit réglable.

12. Système selon l'une des revendications précédentes, dans lequel la structure à profil d'aile est agencée de sorte qu'une section transversale de la structure à profil d'aile ait un angle d'attaque d'environ 15 degrés,
et/ou dans lequel le dispositif de génération d'électricité (8) est agencé de manière étanche dans la cavité.

13. Système selon l'une des revendications précédentes, dans lequel une sortie de drainage est prévue sur le deuxième côté de la structure à profil d'aile, la sortie de drainage comprenant de préférence une tuyauterie en col de cygne.

14. Dispositif utilitaire comprenant l'un parmi une installation d'éclairage public, un poste de charge, un toit et un bâtiment ; dans lequel le dispositif utilitaire est muni d'un système selon l'une des revendications 1 à 13.

15. Dispositif utilitaire selon la revendication 14, dans lequel le système est intégré au dispositif utilitaire.
